# EUROPÄISCHE PATENTSCHRIFT

(11) **EP 4 079 555 B1**
(45) Veröffentlichungstag und Bekanntmachung des Hinweises auf die Patenterteilung: **10.09.2025**
(21) Anmeldenummer: 21215466.0
(22) Anmeldetag: 17.12.2021
(51) Int. Cl.: B60K 35/10

(54) **LANDWIRTSCHAFTLICHES FAHRZEUG**
AGRICULTURAL VEHICLE
VÉHICULE AGRICOLE

(30) Priorität: 19.04.2021 DE 102021109858
(43) Veröffentlichungstag der Anmeldung: 26.10.2022
(73) Patentinhaber: CLAAS Tractor S.A.S., 78141 Vélizy-Villacoublay Cedex (FR)
(72) Erfinder: Bruneau, Eric, 72550 Coulans sur Gée (FR); Congretel, Jérémy, 72210 La Suze sur Sarthe (FR)
(74) Vertreter: CLAAS Gruppe

(56) Entgegenhaltungen:
- WO-A1-2016/143174
- DE-A1- 102015 112 201
- JP-A- 2020 103 255
- US-A1- 2009 248 258

## Beschreibung

Die vorliegende Erfindung betrifft ein landwirtschaftliches Fahrzeug mit Funktionsschaltern, die außen am Fahrzeug angeordnet sind, um von einer Person betätigt werden zu können, die außerhalb des Fahrzeugs aufhält. Ein solches Fahrzeug ist z.B. aus DE 10 2015 112 201 A1 bekannt.

Die US 2009/248258 A1 offenbart ein Landwirtschaftliches Fahrzeug mit wenigstens einem ersten Funktionsschalter, der außen am Fahrzeug angeordnet ist, um durch ein Betätigen erster Art des ersten Funktionsschalters seitens einer außerhalb des Fahrzeugs befindlichen Person den Betrieb eines dem ersten Funktionsschalter zugeordneten Arbeitsorgans des Fahrzeugs oder am Fahrzeug montierten Geräts zu steuern.

Eine Bedieneinheit dieses bekannten Fahrzeugs umfasst eine Mehrzahl von Funktionsschaltern und einen benachbart zu den Funktionsschaltern angeordneten Wählschalter, dessen Stellung die jeweils den Funktionsschaltern zugeordneten Funktionen festlegt. Ein solcher Wählschalter muss bei Anbringung außen am Fahrzeug zuverlässig vor Schmutz und Feuchtigkeit geschützt sein, was seine Verwendung kostspielig und störanfällig macht.

Aufgabe der Erfindung ist, ein landwirtschaftliches Fahrzeug zu schaffen, bei dem der Betrieb von Arbeitsorganen des Fahrzeugs von außerhalb desselben mit kostengünstigen, einfachen und zuverlässigen Mitteln gesteuert werden kann.

Die Aufgabe wird , gemäß dem Gegenstand des Anspruchs 1 gelöst, indem bei einem landwirtschaftlichen Fahrzeug mit wenigstens einem ersten Funktionsschalter, der außen am Fahrzeug angeordnet sind, um durch ein Betätigen erster Art des ersten Funktionsschalters seitens einer außerhalb des Fahrzeugs befindlichen Person den Betrieb eines dem ersten Funktionsschalter zugeordneten Arbeitsorgans des Fahrzeugs oder am Fahrzeug montierten Geräts zu steuern, die Zuordnung des Arbeitsorgans (2) zum Funktionsschalter durch ein Betätigen zweiter Art des Funktionsschalters (8) veränderbar ist. Die Aufgabe des herkömmlichen drehbaren Wählschalters wird so von dem Funktionsschalter selbst übernommen; der Wählschalter wird daher nicht mehr benötigt.

Das zu einem gegebenen Zeitpunkt dem ersten Funktionsschalter zugeordnete Arbeitsorgan ist vorzugsweise aus einem Satz von zuordenbaren Arbeitsorganen auswählbar, wobei der Satz wenigstens ein Arbeitsorgan, das ständiger Bestandteil des Fahrzeugs ist, und/oder wenigstens ein Arbeitsorgan umfasst, das Bestandteil eines am Fahrzeug montierten Geräts ist. Wenn im Folgenden von einem Austausch des zugeordneten Arbeitsorgans die Rede ist, so sollte dies nicht als das physische Entfernen eines Arbeitsorgans und Montieren eines anderen an seiner Stelle verstanden werden, sondern dahingehend, dass ein anderes Arbeitsorgan des Satzes zugeordnet wird, ohne dass dies mit einem Umbau am Fahrzeug verbunden ist.

Insbesondere für den Fall, dass ein zuordenbares Arbeitsorgan Bestandteil eines Geräts ist, kann das Fahrzeug wenigstens einen Anschluss aufweisen, an den ein dem ersten Funktionsschalter zuordenbares Arbeitsorgan lösbar anschließbar ist, und das Steuern des Arbeitsorgans umfasst das Steuern der Versorgung des Arbeitsorgans mit Betriebsmittel über den Anschluss.

Betriebsmittel kann z.B. Antriebsenergie sein, insbesondere in Form von unter Druck stehendem Hydraulikfluid.

Ein solches Arbeitsorgan kann zum Bewegen einer Kupplung dienen, an der ein Gerät lösbar montierbar ist. So kann die Person mit Hilfe der Funktionsschalter die Kupplung in eine zur Montage des Geräts geeignete Position steuern, ohne dass dafür das Fahrzeug selber bewegt werden muss. Weitere Arbeitsorgane können an dem Gerät selber vorhanden sein.

Wenigstens dem ersten Funktionsschalter sollte ein Anzeigeelement zum Anzeigen des jeweils zugeordneten Arbeitsorgans zugeordnet sein. Dasselbe oder ein weiteres Anzeigeelement kann auch einem zweiten oder weiteren Funktionsschaltern zugeordnet sein, wie im Folgenden noch genauer erläutert.

Das Anzeigeelement kann insbesondere ein wenigstens dem ersten Funktionsschalter zugeordnetes Leuchtmittel sein. Eine Lichtfarbe des Leuchtmittels oder ein zeitliches Muster des Betriebs des Leuchtmittels kann für das jeweils gegenwärtig dem Funktionsschalter zugeordnete Arbeitsorgan charakteristisch sein. So kann der Benutzer anhand der Ausgabe des Leuchtmittels erkennen, auf welches Arbeitsorgan Eingaben auswirken werden, die er am Funktionsschalter vornimmt.

Insbesondere kann jeder Funktionsschalter eine Mehrzahl von verschiedenfarbigen LEDs umfassen, die das Anzeigeelement bilden.

Wenn das zu steuernde Arbeitsorgan nicht ständiger Bestandteil des Fahrzeugs ist, sondern über einen Anschluss des Fahrzeugs zeitweilig versorgt wird, kann eine farbige Markierung an dem Anschluss vorgesehen sein, und die Farbe dieser Markierung ist die dem daran angeschlossenen Arbeitsorgan zugeordnete Farbe.

Vorzugsweise ist der erste Funktionsschalter ein Taster, d.h. ein Bedienelement, das je nachdem ob es berührt wird oder nicht, zwei unterschiedliche Ausgangssignale liefert. Als Betätigen erster Art kann dann ein kurzes Drücken des Tasters, als Betätigen zweiter Art ein langes Drücken des Tasters angenommen werden.

Wenn ein zweiter Funktionsschalter vorhanden ist, kann als Betätigen zweiter Art auch ein gleichzeitiges Betätigen des ersten und des zweiten Funktionsschalters angenommen werden.

Wenn erster und zweiter Funktionsschalter einem gleichen Arbeitsorgan zugeordnet sind, ist die Wirkung eines Betätigens erster Art des zweiten Funktionsschalters auf das Arbeitsorgan vorzugsweise der Wirkung eines ersten Betätigens des ersten Funktionsschalters auf das Arbeitsorgan entgegengesetzt.

Ein Austausch des zugeordneten Arbeitsorgans kann die unmittelbare Folge des Betätigens zweiter Art sein. Dies kann insbesondere dann sinnvoll sein, wenn die Zahl der Arbeitsorgane, zwischen denen umgeschaltet wird, klein ist. Alternativ kann das Betätigen zweiter Art in einen Auswahlbetriebszustand führen, in welchem ein Betätigen erster Art des ersten oder ggf. zweiten Funktionsschalters einen Austausch des zugeordneten Arbeitsorgans bewirkt. Wenn der zweite Funktionsschalter vorhanden ist, kann vorgesehen sein, dass im Auswahlbetriebszustand ein durch Betätigen eines der Funktionsschalter herbeigeführter Austausch des zugeordneten Arbeitsorgans durch Betätigen des jeweils anderen rückgängig gemacht wird.

Ein erneutes Betätigen zweiter Art kann eine Rückkehr aus dem Auswahlbetriebszustand in einen Normalbetriebszustand bewirken, in welchem ein Betätigen erster Art eines der Funktionsschalter den Betrieb des aktuell zugeordneten Arbeitsorgans steuert.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Heckpartie eines Traktors mit einem externen Bedienfeld;
- Fig. 2A-C: vergrößerte Ansichten des Bedienfelds in verschiedenen Etappen seiner Betätigung.

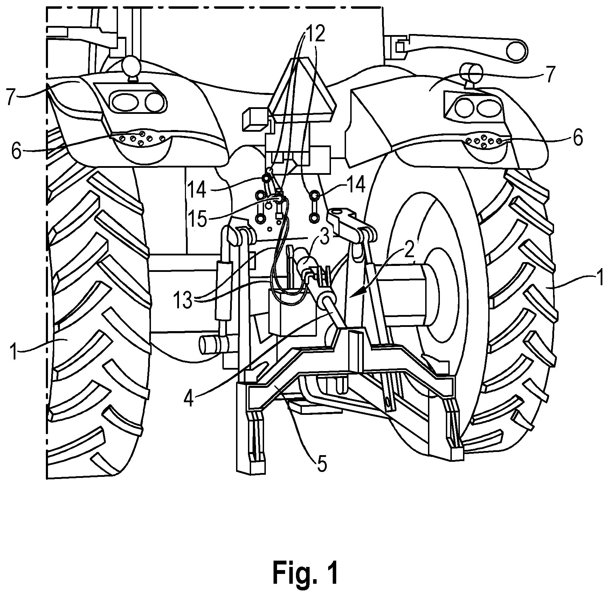

Fig. 1 zeigt die Heckpartie eines Traktors als Beispiel für ein erfindungsgemäßes landwirtschaftliches Fahrzeug. Zwischen Hinterrädern 1 des Traktors ist ein hydraulisches Stellglied als Beispiel eines Arbeitsorgans 2 gezeigt. Ein Zylinder 3 des Stellglieds ist an das Fahrgestell des Traktors angelenkt, während eine Kolbenstange 4 an einer Kupplung 5 für ein nicht dargestelltes Gerät, wie etwa ein Bodenbearbeitungswerkzeug, angreift. Durch Ein- und Ausfahren des Stellglieds kann die Kupplung 5 in eine zum Ankoppeln des Geräts geeignete Position oder Orientierung gebracht werden.

Am rückwärtigen Ende des Fahrgestells sind ferner mehrere Anschlüsse 14, 15 für Hydraulikfluid angeordnet, die von einer nicht dargestellten Pumpe des Traktors gespeist werden. Einer dieser Anschlüsse 15 ist mit Schläuchen 13 belegt, die den Zylinder 3 versorgen.

Wenigstens ein Bedienfeld 6 am Heck des Traktors, hier z.B. an einer hinteren Kante eines Kotflügels 7, ist vorgesehen, um Bewegungen des Stellglieds 2 und anderer hier nicht dargestellter Elemente des Traktors über mehrere Funktionsschalter des Bedienfeldes 6 zu steuern. Im hier gezeigten Fall sind zwei bau- und funktionsgleiche Bedienfelder 6 auf beiden Seiten des Traktors angebracht, um einem Benutzer den Zugriff zu ermöglichen, ohne dafür um einen eventuell an den Traktor gekoppelten Anhänger, ein Werkzeug oder dergleichen herumlaufen zu müssen.

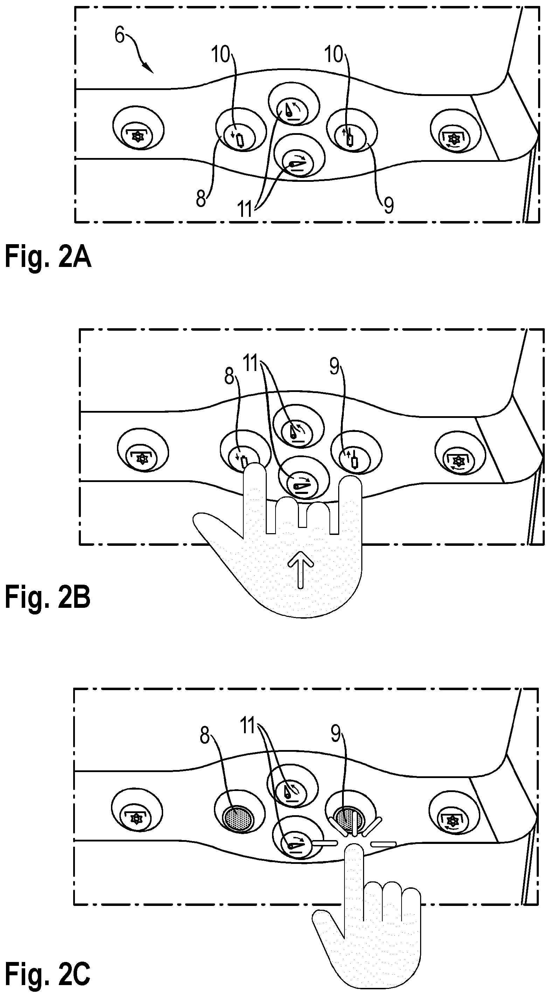

Die Funktionsschalter sind, wie in Fig. 2A gezeigt, in Form von Tastern mit eindrückbaren Knöpfen ausgebildet; alternativ könnten die Taster auch als hinter einer unbeweglichen, geschlossenen Oberfläche angeordnete Näherungsschalter oder Bereiche eines Touchscreens realisiert sein. Von den gezeigten Funktionsschaltern sind nur zwei, mit 8 und 9 bezeichnet, für die Erfindung relevant; dass sie zum Steuern eines Arbeitsorgans dienen, ist für einen Benutzer anhand von zugeordneten Piktogrammen 10 ersichtlich, die jeweils ein Arbeitsorgan und einen Richtungspfeil zeigen. Die Richtungspfeile verdeutlichen, dass einer der Funktionsschalter 8 eine Aufwärtsbewegung eines Arbeitsorgans steuert und der andere 9 eine Abwärtsbewegung.

Die Funktionsschalter 8 und 9 sind jeweils einem der Anschlüsse 14, 15 zuordenbar, d.h. beide Funktionsschalter 8, 9 steuern Zu- und Abfluss von Hydraulikfluid an Ein- und Auslass eines einzigen Anschlusses und damit ggf. die Bewegung eines einzigen, über diesen Anschlüsse gespeisten Arbeitsorgans. Funktion des Funktionsschalters 8 ist das Erhöhen der Menge an ausgegebener Hydraulikflüssigkeit an einem Hochdruckauslass des aktuell zugeordneten Anschlusses und damit z.B. das Bewirken der Aufwärtsbewegung des mit dem Anschluss verbundenen Arbeitsorgans, Funktion des Funktionsschalters 9 ist das Vermindern der Menge an ausgegebener Hydraulikflüssigkeit an dem Hochdruckauslass und damit ein geregeltes Absenken des Arbeitsorgans. Denkbar wäre auch, dass die Funktion der Funktionsschalter 8, 9 das Erhöhen bzw. Vermindern einer Flussrate - und damit der Geschwindigkeit eines mit dem Hydraulikfluid gespeisten Arbeitsorgans ist, wobei ein solches Arbeitsorgan mit der jeweils über die Funktionsschalter 8, 9 eingestellten Geschwindigkeit auch dann in Betrieb sein kann, wenn die Funktionsschalter 8, 9 gerade nicht betätigt werden oder einem anderen Anschlusspaar zugeordnet sind.

Jedem Anschluss 14, 15 ist als Kennung eine Farbe zugeordnet. Welche, das ist an einer benachbart zu jedem Anschluss am Fahrgestell des Traktors angeordneten farbigen Markierung 12 ersichtlich.

Die Funktionsschalter 8, 9 können, z.B. mittels verschiedenfarbiger LEDs, in den Farben der Markierungen 12 zum Leuchten gebracht werden. Um einen der Funktionsschalter 8, 9 in einer beliebigen Farbe zum Leuchten bringen zu können, genügt es, diesem drei LEDs in den Grundfarben Rot, Grün und Blau zuzuordnen und diese einzeln oder in Kombination zu betreiben. Anhand der Farbe, in der die Funktionsschalter 8, 9 leuchten, kann der Benutzer erkennen, auf welchen Anschluss bzw. welches eventuell daran angeschlossene Arbeitsorgan Betätigungen der Funktionsschalter 8, 9 sich aktuell auswirken würden.

Wenn das aktuell den Funktionsschaltern 8, 9 zugeordnete Arbeitsorgan nicht das Arbeitsorgan 2 ist, ein Benutzer aber dieses Arbeitsorgan 2 steuern möchte, dann betätigt er, wie in Fig. 2B gezeigt, beide Funktionsschalter 8, 9 gleichzeitig, indem er sie solange gedrückt hält, bis diese - oder auch benachbarte, nicht von den Fingern des Benutzers verdeckte und deshalb besser sichtbare Funktionsschalter 11 - zu blinken beginnen. Dies zeigt den Übergang des Bedienfeldes 6 in einen Auswahlbetriebszustand an, in welchem durch kurzes Drücken eines der Funktionsschalter 8, 9 die Zuordnung der Funktionsschalter 8, 9 zu den Anschlusspaaren 14, 15 geändert werden kann.

Wenn der Benutzer im Auswahlbetriebszustand auf einen der Funktionsschalter 8, 9 drückt (Fig. 2C), dann zeigen die Bedienelemente 8, 9 die geänderte Zuordnung durch einen Wechsel ihrer Farbe an. Der Benutzer wiederholt das Drücken so oft, bis die Bedienelemente 8, 9 die Farbe des von ihm gewünschten Anschlusspaars 14, 15 annehmen.

Die Reihenfolge, in der die jeweils ausgewählten Anschlusspaare abwechseln, kann für beide Funktionsschalter 8, 9 jeweils umgekehrt sein; so kann ein Benutzer, wenn der Satz von zuordenbaren Arbeitsorganen oder Anschlüssen der beiden Funktionsschalter umfangreich ist, jeweils denjenigen Funktionsschalter 8 oder 9 benutzen, mit dem er mit der kleineren Zahl von Betätigungen das gewünschte Anschlusspaar auswählen kann, oder er kann, wenn er einen der Funktionsschalter zu oft gedrückt hat und über das Ziel hinausgeschossen ist, den Fehler durch Drücken des anderen Funktionsschalters korrigieren.

Durch erneutes langes gleichzeitiges Drücken beider Funktionsschalter 8, 9 kehrt das Bedienfeld 6 in den Normalbetriebszustand zurück, in dem der Funktionsschalter 8 das Ausfahren und der Funktionsschalter 9 das Einfahren des aktuell ausgewählten Arbeitsorgans steuert, indem es das Umwälzen von Hydraulikfluid über das zugeordnete Anschlusspaar mit einer vorgegebenen Rate in jeweils entgegengesetzten Richtungen bewirkt, solange der entsprechende Funktionsschalter 8 bzw. 9 gedrückt ist.

Als Arbeitsorgane kommen auch rotierende Antriebe wie etwa Hydromotoren in Betracht. Bei diesen kann die Funktion der Funktionsschalter 8,9 anstelle des Steuerns der Stellung auch ein Steuern der Geschwindigkeit sein; d.h. durch Drücken eines Funktionsschalters 8 oder 9 wird nicht die Menge eines kumulativ dem Arbeitsorgan zugeführten Hydraulikfluids beeinflusst, sondern die Rate, mit der das Hydraulikfluid zugeführt wird, und damit die Geschwindigkeit und, wenn die Rate ihr Vorzeichen wechseln kann, auch die Laufrichtung des Arbeitsorgans.

### Bezugszeichen

- 1: Hinterrad
- 2: Stellglied
- 3: Zylinder
- 4: Kolbenstange
- 5: Haltegeschirr
- 6: Bedienfeld
- 7: Kotflügel
- 8: Bedienelement
- 9: Bedienelement
- 10: Piktogramm
- 11: Bedienelement
- 12: Markierung
- 13: Versorgungsleitung
- 14: Anschluss
- 15: Anschluss

## Patentansprüche

1. Landwirtschaftliches Fahrzeug mit wenigstens einem ersten Funktionsschalter (8), der außen am Fahrzeug angeordnet ist, um durch ein Betätigen erster Art des ersten Funktionsschalters (8) seitens einer außerhalb des Fahrzeugs befindlichen Person den Betrieb eines dem ersten Funktionsschalter zugeordneten Arbeitsorgans (2) des Fahrzeugs oder am Fahrzeug montierten Geräts zu steuern, **dadurch gekennzeichnet, dass** die Zuordnung des Arbeitsorgans (2) des Fahrzeugs oder des am Fahrzeug montierten Geräts zum ersten Funktionsschalter (8) durch ein Betätigen zweiter Art des ersten Funktionsschalters (8) veränderbar ist, wobei wenigstens der erste Funktionsschalter (8) durch ein Betätigen zweiter Art aus einem Normalbetriebszustand in einen Auswahlbetriebszustand umschaltbar ist, in welchem ein Betätigen erster Art des ersten Funktionsschalters (8) einen Austausch des zugeordneten Arbeitsorgans (2) bewirkt, wobei wenigstens der erste Funktionsschalter (8) aus dem Auswahlbetriebszustand durch ein Betätigen zweiter Art in den Normalbetriebszustand umschaltbar ist, in welchem ein Betätigen erster Art des ersten Funktionsschalters (8) den Betrieb des zugeordneten Arbeitsorgans (2) steuert.

2. Landwirtschaftliches Fahrzeug nach Anspruch 1, **dadurch gekennzeichnet, dass** durch das Betätigen zweiter Art das zugeordnete Arbeitsorgan (2) aus einem Satz von zuordenbaren Arbeitsorganen auswählbar ist, wobei der Satz wenigstens ein Arbeitsorgan (2), das ständiger Bestandteil des Fahrzeugs ist, und/oder wenigstens ein Arbeitsorgan (2) umfasst, das Bestandteil eines am Fahrzeug montierten Geräts ist.

3. Landwirtschaftliches Fahrzeug nach Anspruch 1 oder 2, **dadurch gekennzeichnet, dass** es wenigstens einen Anschluss aufweist, an den ein dem ersten Funktionsschalter (8) zuordenbares Arbeitsorgan (2) lösbar anschließbar ist, und dass das Steuern des Arbeitsorgans (2) das Steuern der Versorgung mit Betriebsmittel über den Anschluss umfasst.

4. Landwirtschaftliches Fahrzeug nach einem der vorhergehenden Ansprüche, **dadurch gekennzeichnet, dass** das Arbeitsorgan (2) zum Bewegen einer Kupplung (5) dient, an der ein Gerät lösbar montierbar ist.

5. Landwirtschaftliches Fahrzeug nach einem der vorhergehenden Ansprüche, **dadurch gekennzeichnet, dass** wenigstens dem ersten Funktionsschalter (8) ein Anzeigeelement zum Anzeigen des jeweils zugeordneten Arbeitsorgans (2) zugeordnet ist.

6. Landwirtschaftliches Fahrzeug nach Anspruch 5, **dadurch gekennzeichnet, dass** das Anzeigeelement ein dem Funktionsschalter (8) zugeordnetes Leuchtmittel ist und dass vorzugsweise eine Lichtfarbe des Leuchtmittels oder ein zeitliches Muster des Betriebs des Leuchtmittels für das jeweils zugeordnete Arbeitsorgan (2) charakteristisch ist.

7. Landwirtschaftliches Fahrzeug nach Anspruch 6, **dadurch gekennzeichnet, dass** der Funktionsschalter (8) eine Mehrzahl von verschiedenfarbigen LEDs umfasst, die das Anzeigeelement bilden.

8. Landwirtschaftliches Fahrzeug nach einem der Ansprüche 5 bis 7, und nach Anspruch 3, dass eine Markierung in der dem Arbeitsorgan (2) zugeordneten Farbe an dem Anschluss vorgesehen ist.

9. Landwirtschaftliches Fahrzeug nach einem der vorhergehenden Ansprüche, **dadurch gekennzeichnet, dass** der erste Funktionsschalter (8) ein Taster ist, dass das Betätigen erster Art ein kurzes Drücken des Tasters umfasst, und dass das Betätigen zweiter Art ein langes Drücken des Tasters umfasst.

10. Landwirtschaftliches Fahrzeug nach einem der vorhergehenden Ansprüche, **dadurch gekennzeichnet, dass** das Betätigen zweiter Art ein gleichzeitiges Betätigen des ersten Funktionsschalters und eines zweiten Funktionsschalters (9) umfasst.

11. Landwirtschaftliches Fahrzeug nach einem der vorhergehenden Ansprüche, **dadurch gekennzeichnet, dass** der erste Funktionsschalter (8) und ein zum ersten Funktionsschalter (8) benachbarter zweiter Funktionsschalter (9) einem gleichen Arbeitsorgan (2) zugeordnet sind und ein Betätigen erster Art des zweiten Funktionsschalters (9) eine Wirkung auf das Arbeitsorgan (2) hat, die der Wirkung eines ersten Betätigens des ersten Funktionsschalters (8) auf das Arbeitsorgan (2) entgegengesetzt ist.

## Claims

1. An agricultural vehicle with at least one first function switch (8), which is disposed on the outside of the vehicle, for controlling the operation of a working unit (2) of the vehicle or implement mounted on the vehicle associated with the first function switch by means of a first type of actuation of the first function switch (8) on the part of a person located outside the vehicle, **characterized in that** the association of the working unit (2) of the vehicle or of the implement mounted on the vehicle with the first function switch (8) can be changed by a second type of actuation of the first function switch (8), wherein at least the first function switch (8) can be switched from a normal operating state into a selecting operating state by an actuation of the second type, in which a first type of actuation of the first function switch (8) brings about an exchange of the associated working unit (2), wherein at least the first function switch (8) can be switched by means of an actuation of the second type from the selecting operating state into the normal operating state in which a first type of actuation of the first function switch (8) controls the operation of the associated working unit (2).

2. The agricultural vehicle according to claim 1, **characterized in that** by means of the actuation of the second type, the associated working unit (2) can be selected from a set of associatable working units, wherein the set comprises at least one working unit (2), which is a permanent component of the vehicle, and/or comprises at least one working unit (2) which is a component of an implement mounted on the vehicle.

3. The agricultural vehicle according to claim 1 or claim 2, **characterized in that** it has at least one connection to which a working unit (2) which can be associated with the first function switch (8) can be detachably attached, and **in that** the control of the working unit (2) comprises the control of the supply of operational fluid via the connection.

4. The agricultural vehicle according to one of the preceding claims, **characterized in that** the working unit (2) serves for the movement of a coupling (5) on which an implement can be detachably mounted.

5. The agricultural vehicle according to one of the preceding claims, **characterized in that** an indicating element for indicating the respectively associated working unit (2) is associated at least with the first function switch (8).

6. The agricultural vehicle according to claim 5, **characterized in that** the indicating element is an illuminant associated with the function switch (8) and **in that** preferably, a colour of the light from the illuminant or a temporal pattern for the operation of the illuminant is characteristic of the respectively associated working unit (2).

7. The agricultural vehicle according to claim 6, **characterized in that** the function switch (8) comprises a plurality of differently coloured LEDs which form the indicating element.

8. The agricultural vehicle according to one of claims 5 to 7, and according to claim 3, in which a mark in the colour associated with the working unit (2) is provided on the connection.

9. The agricultural vehicle according to one of the preceding claims, **characterized in that** the first function switch (8) is a button, **in that** the actuation of the first type is a short press of the button, and **in that** the actuation of the second type is a long press of the button.

10. The agricultural vehicle according to one of the preceding claims, **characterized in that** the actuation of the second type comprises a simultaneous actuation of the first function switch and of a second function switch (9).

11. The agricultural vehicle according to one of the preceding claims, **characterized in that** the first function switch (8) and a second function switch (9) adjacent to the first function switch (8) are associated with one and the same working unit (2) and a first type of actuation of the second function switch (9) has an effect on the working unit (2) which is opposite to the effect of a first actuation of the first function switch (8) on the working unit (2).

## Revendications

1. Véhicule agricole comprenant au moins un premier commutateur de fonctions (8) qui est disposé à l'extérieur sur le véhicule pour commander, par actionnement en premier mode du premier commutateur de fonctions (8) par une personne se trouvant à l'extérieur du véhicule, le fonctionnement d'un organe de travail (2) du véhicule associé au premier commutateur de fonctions ou d'un équipement monté sur le véhicule, **caractérisé en ce que** l'association de l'organe de travail (2) du véhicule ou de l'équipement monté sur le véhicule au premier commutateur de fonctions (8) peut être modifiée par actionnement en deuxième mode du premier commutateur de fonctions (8), sachant qu'au moins le premier commutateur de fonctions (8) peut être commuté, par un actionnement en deuxième mode, d'un état de fonctionnement normal à un état de fonctionnement de sélection dans lequel un actionnement en premier mode du premier commutateur de fonctions (8) provoque un remplacement de l'organe de travail (2) associé, sachant qu'au moins le premier commutateur de fonctions (8) peut être commuté, par actionnement en deuxième mode, de l'état de fonctionnement de sélection à l'état de fonctionnement normal dans lequel un actionnement en premier mode du premier commutateur de fonctions (8) commande le fonctionnement de l'organe de travail (2) associé.

2. Véhicule agricole selon la revendication 1, **caractérisé en ce que** l'actionnement en deuxième mode permet de sélectionner l'organe de travail (2) associé dans un ensemble d'organes de travail pouvant être associés, ledit ensemble comprenant au moins un organe de travail (2) qui fait partie intégrante permanente du véhicule, et/ou au moins un organe de travail (2) qui fait partie intégrante d'un équipement monté sur le véhicule.

3. Véhicule agricole selon la revendication 1 ou 2, **caractérisé en ce qu'**il présente au moins un raccord auquel peut être raccordé de façon amovible un organe de travail (2) pouvant être associé au premier commutateur de fonctions (8), et **en ce que** la commande de l'organe de travail (2) comprend la commande de l'alimentation en matière consommable par l'intermédiaire du raccord.

4. Véhicule agricole selon une des revendications précédentes, **caractérisé en ce que** l'organe de travail (2) sert à déplacer un attelage (5) sur lequel un équipement peut être monté de façon amovible.

5. Véhicule agricole selon une des revendications précédentes, **caractérisé en ce qu'**est associé au moins au premier commutateur de fonctions (8), un élément d'affichage destiné à afficher l'organe de travail (2) respectif associé.

6. Véhicule agricole selon la revendication 5, **caractérisé en ce que** l'élément d'affichage est un moyen d'éclairage associé au commutateur de fonctions (8), et **en ce que**, de préférence, une couleur de lumière du moyen d'éclairage ou un motif temporel du fonctionnement du moyen d'éclairage est caractéristique de l'organe de travail (2) associé respectif.

7. Véhicule agricole selon la revendication 8, **caractérisé en ce que** le commutateur de fonctions (8) comprend une pluralité de DELs de couleurs différentes, qui constituent l'élément d'affichage.

8. Véhicule agricole selon une des revendications 5 à 7 et selon la revendication 3, **caractérisé en ce qu'**un repère de la couleur associée à l'organe de travail (2) est prévu sur le raccord.

9. Véhicule agricole selon une des revendications précédentes, **caractérisé en ce que** le premier commutateur de fonctions (8) est un bouton-poussoir, **en ce que** l'actionnement en premier mode comprend un appui bref sur le bouton-poussoir, et **en ce que** l'actionnement en deuxième mode comprend un appui long sur le bouton-poussoir.

10. Véhicule agricole selon une des revendications précédentes, **caractérisé en ce que** l'actionnement en deuxième mode comprend un actionnement simultané du premier commutateur de fonctions et d'un deuxième commutateur de fonctions (9).

11. Véhicule agricole selon une des revendications précédentes, **caractérisé en ce que** le premier commutateur de fonctions (8) et un deuxième commutateur de fonctions (9) adjacent au premier commutateur de fonctions (8) sont associés à un même organe de travail (2), et un actionnement en premier mode du deuxième commutateur de fonctions (9) a un effet sur l'organe de travail (2) qui est opposé à l'action
